# EUROPEAN PATENT APPLICATION

(11) **EP 3 534 307 A1**
(43) Date of publication of application: **04.09.2019**
(21) Application number: 18159279.1
(22) Date of filing: 28.02.2018
(51) Int. Cl.: G06Q 10/06, G09B 19/00

(54) **A MEAL PREPARATION GUIDANCE SYSTEM**

(71) Applicant: Mealhero, 9420 Erpe-Mere (BE)
(72) Inventor: Claeys, Anton, 3000 Leuven (BE); Spitaels, Jeroen, 9050 Gent (BE); Debaere, Steven, 9000 Gent (BE)
(74) Representative: IP HILLS NV

(57) **Abstract**

A meal preparation guidance system (100) comprises:
A. a user profile database (101) to maintain a user food profile (111) for a user linked to a remote controllable meal preparation device (160);
B. a food item inventory (102) to maintain an inventory (121) of food items associated with the meal preparation device (160);
C. a meal suggestion engine (103) to generate a meal suggestion (133) for the user based on the user food profile (111) and the inventory (121); and
D. a meal preparation instruction engine (104) to generate processor interpretable meal preparation instructions (137) for the meal preparation device (160) based on the user food profile (111).

The meal preparation instructions (137) are transferred to the meal preparation device (160) thereby enabling the meal preparation device (160) to prepare food items that form part of a meal according to the user food profile (111) of the user.

## Description

### Field of the Invention

The present invention generally relates to a meal preparation guidance system, i.e. a cloud-based platform that generates processor interpretable meal preparation instructions for a meal preparation device whereto one or plural users are linked. The present invention in particular concerns an improved meal preparation guidance system that more optimally guides users in the entire process of managing a food item inventory, selecting meals, and preparing such meals in accordance with personalized recipes by a meal preparation device under remote control of the meal preparation guidance system.

### Background of the Invention

Preparing a meal for one or plural persons, for instance a family, involves management of a food item inventory (knowing which ingredients are available in the refrigerator or freezer, which quantities of ingredients are available, which ingredients are nearing the expiry date, which ingredients need to be ordered and bought for a specific meal, etc.), selection of a meal (taking into consideration availability of food items, preferences of persons for whom the meal is prepared, allergies or situational circumstances like pregnancy of persons for whom the meal is prepared, daytime, season, etc.), and preparing the ingredients or food items of the meal according to the personal preferences (taste, texture, ...) of the persons for whom the meal is prepared. Often, people lack time and tools to properly manage the content of their fridge or pantry, lack inspiration for varying meals, and manually control ovens, boilers, steamers or other appliances according to best-effort, non-consistent practices to prepare ingredients as a result of which meals are selected and prepared sub-optimally. The preparation of meals remains a time consuming and stressing task for many persons, with poor satisfaction. Consequently, there is a general need for better tools to assist persons in the entire process of managing a food item inventory, selecting meals, and preparing meals.

United States Patent Application US 2017/0139385 A1 entitled "Data Aggregation and Personalization for Remotely Controlled Cooking Devices" describes a food preparation guidance system that generates processor-readable cooking programs for a cooking device. The food preparation guidance system relies on information stored in an online recipe database and on user profiles to personalize the cooking programs in order to consider the diverse preferences that people have regarding texture, taste or other properties of cooked food items.

Although US 2017/0139385 A1 addresses the problem of personal preferences in preparing food, the personalization of recipes by the food preparation guidance system known therefrom is rather limited as it depends on information received from the user specifying what food items he/she wants to prepare. The food preparation guidance system in other words has no visibility on all food items or ingredients available with the user, food themes the user likes or dislikes, restrictions as a result of medical conditions like allergies or situational conditions like diets, etc. As such, the personalization of food preparation in US 2017/0139385 A1 is limited to adjusting the cooking temperatures or cooking times of food items by the remotely controlled cooking device.

United States Patent Application US 2016/0335588 A1 entitled "Dish Recommendation from Personal Food Inventory" describes a cloud-based personal inventory system that maintains an inventory of food items bought by an account user with preferred vendors known to the system. The inventory is used to generate personalized meal recommendations for users of the system. These personalized meal recommendations can further be filtered by the user through a user interface enabling to specify allergies, diets, etc.

When using the system of US 2016/0335588 A1, the user is left with the complexity of preparing the food items for a recommended dish. The user must establish which appliances to use in preparing the different food items, and must determine which cooking program, i.e. which sequence of temperatures and times, to apply using a certain appliance to prepare a food item. The system of US 2016/0335588 A1 provides no guidance on the preparation of food items, and for sure does not remotely configure any appliances in order to automate the preparation of a recommended dish.

United States Patent Application US 2014/0255882 A1 entitled "Interactive Engine to Provide Personal Recommendations for Nutrition, to Help the General Public to Live a Balanced Healthier Lifestyle" describes a virtual nutritionist that suggest meals based on a user food profile that comprises eating habits, medical info like allergies, pregnancy, etc., diet goals, explicit feedback, etc.

The virtual nutritionist known from US 2014/0255882 A1 is not aware of any availability of food items or expiry dates thereof, and consequently does not suggest meals that can be prepared readily by the user. The virtual nutritionist also does not provide any guidance on the preparation of food items that compose the recommended meals, neither does it remotely control any household appliances in order to automate the preparation of food items for the recommended meals. The user that desires to follow the virtual nutritionist's advice in other words is left with the complexity of finding the ingredients and preparing the ingredients for the recommended meals.

It is an objective of the present invention to disclose a cloud-based meal recommendation platform that overcomes one or several of the above-mentioned drawbacks of existing solutions. More particularly, it is an objective to disclose a cloud-based meal recommendation platform that guides its users optimally in the entire process from buying ingredients and managing an ingredient inventory, to selecting meals and preparing such meals with available ingredients. Ultimately, the cloud-based meal recommendation platform according to the invention will be able to receive from a user a request to prepare for example a two-person meal for dinner with a friend in 20 minutes, and the platform will autonomously and automatically select the meal, control one or several appliances to prepare the proper volume of ingredients for the meal to be ready in time, and manage the inventory of ingredients with minimal or no intervention of the user.

### Summary of the Invention

According to the present invention, the above objective is achieved by the cloud-based meal preparation guidance system defined by claim 1, comprising:
A. a user profile database configured to maintain a user food profile for a user linked to a remote controllable meal preparation device, the user food profile comprising one or more of:
   - recipe preferences of the user for food items when prepared by the meal preparation device;
   - medical information of the user; and
   - situational information of the user;
B. a food item inventory configured to maintain an inventory of food items associated with the meal preparation device;
C. a meal suggestion engine, coupled to the user profile database and the food item inventory, and configured to generate a meal suggestion for the user based on the user food profile and the inventory; and
D. a meal preparation instruction engine adapted to generate processor interpretable meal preparation instructions for the meal preparation device based on the user food profile, and adapted to transfer the processor interpretable meal preparation instructions to the meal preparation device thereby enabling the meal preparation device to prepare food items that form part of the meal suggestion according to the user food profile of said user.

Thus, the invention concerns a meal preparation guidance system that stays aware of user food profiles (recipe preferences, medical and situational information) of users linked to a meal preparation device, for instance the members of a family, and that stays aware of the inventory of food items associated with the meal preparation device, for instance ingredients stored in the freezer or refrigerator in the house where the meal preparation device is located. The meal preparation guidance system uses the user food profile(s) linked thereto and the food item inventory associated therewith to generate meal suggestions, and also generates signals to remotely configure the meal preparation device to prepare the food ingredients of a meal in accordance with the personal preferences of the person(s) that will eat the meal. It is noticed that a user linked to a meal preparation device may represent a single person or alternatively may represent multiple persons, when for instance a single user account is maintained for a family or household, for colleagues of a department at work, etc. The meal that is prepared under remote control of the meal preparation guidance system may be determined by the food items sensed/scanned by the meal preparation device, may have been selected from a list of suggested meals by a user, or it may have been selected automatically by the meal preparation guidance system. In the latter case, the selected meal corresponds to the suggested meal. The food items required to prepare the meal are inserted in the meal preparation device by a person at the location of the meal preparation device. In case the meal preparation device is equipped with a scanner or sensor, each food item inserted in the meal preparation device may be identified through scanning a label or tag attached to the container holding the food item. The food item identification may then be communicated to the meal preparation guidance system such that the meal preparation system can update the food item inventory and can generate the proper personalized preparation instructions for the meal preparation device. The human-machine interaction is limited to scanning the food items, inserting the food items in the meal preparation device, and touching a start button of the meal preparation device. In case of a more advanced meal preparation device with integrated food item storage and food item dispenser, the meal preparation device may upon instruction of the meal preparation guidance system automatically select and dispense the food items needed to prepare the meal. The meal preparation guidance system shall again be able to update its food item inventory and to generate the proper personalized preparation instructions for the dispensed food items, but this time the meal is prepared fully automatically, possibly to be ready at a time specified in advance by the user or derived by a location awareness system, for instance a GPS system. In the latter example, there is no human-machine interaction at all to prepare/cook the meal. A suggested meal, selected by the meal preparation guidance system in view of personal preferences, medical and situational information, is fully automatically prepared by a remote meal preparation device according to a personalized recipe generated by the meal preparation guidance system according to the invention.

It is noticed that maintaining a user food profile in a personal database, as required by the present invention, involves creating, memorizing, updating and/or deleting information in relation to a single user that has upfront registered with the meal preparation guidance system and that is linked to a particular meal preparation device. As mentioned above, a user may be a single person or may represent multiple persons. It is further noticed that multiple users may be linked to a single meal preparation device. Similarly, maintaining a food item inventory, as required by the present invention, involves creating, memorizing, updating and/or deleting information listing food items associated with a meal preparation device and respective amounts of these food items available at the location of the meal preparation device. The food item inventory is for instance updated as a result of a confirmed delivery of food items at the location, as a result of consumption of food items for meal preparation, as a result of disposal of food items, for instance disposal of expired food items as reported by a user, etc.

In embodiments of the meal preparation guidance system according to the invention, defined by claim 2, the recipe preferences comprise one or more of:
- heating times for food items prepared by the meal preparation device preferred by the user;
- heating temperatures for food items prepared by the meal preparation device preferred by the user;
- preparation programs for food items prepared by the meal preparation device preferred by the user;
- preferred food tastes of the user;
- preferred food themes of the user;
- detected food patterns for the user;
- eating history information for the user;
- information received from the meal preparation device or from a mobile application, indicative for food items selected and/or prepared in past meals by the user;
- information received from the meal preparation device or from a mobile application, indicative for food items of past meal suggestions, not selected by the user for preparation;
- explicit feedback of the user on past meals; and
- implicit feedback on past meals.

The user food profile in other words comprises any information indicative for the user's preferences with respect to food or the way food is prepared by the meal preparation device where the user is linked to. A heating time corresponds to a time interval for heating a food item, for instance an ingredient like pasta or an ingredient mix like Italian vegetables, by the meal preparation device. The heating time of a food item preferred by a user may be learned from the start and stop times of preparation of past meals wherein the food item was used in situations where the user can manually set or overrule the start and stop times of the meal preparation device, or they can be updated on the basis of user feedback with respect to meals. These start and stop times may be communicated automatically by the meal preparation device to the meal preparation guidance system. Alternatively or supplementary, explicit or implicit feedback received from the user, e.g. via a mobile application, may be exploited to maintain such heating times. A user may for instance report via a mobile application to the meal preparation guidance system that the pasta in a meal was too sticky, too mushy or too watery, as a consequence of which the meal preparation guidance system will automatically tune the heating time for pasta in that user's profile. Similarly, a heating temperature corresponds to the temperature for heating a food item by the meal preparation device as preferred by the user. The preferred heating temperature may be learned from temperature settings reported by the meal preparation device during preparation of the food item in past meals for that user in situations where the user can manually set or overrule the heating temperatures of the meal preparation device. Alternatively or supplementary, explicit or implicit feedback from the user through a mobile application may be exploited to adapt the preferred heating temperatures for respective food items in the user food profile. The user may for instance report via a mobile application to the meal preparation guidance system that the chicken in a meal was not warm enough on the inside, as a consequence of which the meal preparation guidance system shall automatically adapt the heating temperature for chicken in the user food profile of that user. A preparation program corresponds to a sequence of preparation types, times and temperatures or heating profiles to be executed by the meal preparation device to prepare a food item. Preparation types comprise for instance steaming, baking, microwaving, boiling, etc. In case the meal preparation device performs a single preparation type, e.g. steaming, a preparation program merely corresponds of a sequence of times and temperatures or heating profiles. A preparation program may for example specify that a food item must be heated for 1 minute at 100 % of the heating capacity, for 5 minutes at 50 % of the heating capacity, and for 3 minutes at 60 % of the heating capacity. Preferred food tastes of a user for instance include bitter, sweet, salty, etc.. Preferred food themes of a user for instance include Asian, Italian, Spanish, French, etc. or indicate preferred or non-preferred ingredients or ingredient combinations. Such preferred food tastes and/or preferred food themes may be reported by a user via a mobile application to the meal preparation guidance system. Further, the meal preparation guidance system may detect food patterns, like for instance a user's habit to eat vegetarian once a week, to eat fish every Friday, to combine chicken with rice, etc. The preparation guidance system may learn such food patterns and automatically add them to the user food profile of a user. The user food profile further may comprise eating history information for the user. If analysis of the user's eating behaviour reveals that the user is always eating chicken, this is preferably memorized as part of his user food profile. A meal preparation device equipped with a scanner or sensor to sense the food items, shall automatically report which ingredients or food items are used to prepare a meal. Alternatively, the user may use a mobile application running on a smart device to inform the meal preparation guidance system on the ingredients or food items used in a meal. Such information enables the meal preparation guidance system to adapt the inventory of food items, but also may be used to adjust the user's profile as the choice of ingredients or food items may be indicative for the user's preferred food tastes, food themes or be indicative for any food patterns or eating behaviour. Apart from the ingredients or food items used to prepare a meal, the meal preparation device or mobile application may report other explicit information like temperature settings, cooking times, etc. as set or overruled by the user, as well as meal ratings entered by the user. The meal preparation device and/or the mobile application also may report implicit information to the meal preparation guidance system. If for instance three different meals were suggested to a user, the non-selection of two meals represents implicit information that may also be exploited by the meal preparation guidance system to adjust the user's food taste or food theme preferences, or to adjust certain food patterns. If for instance a user always eats chicken, the implicit feedback on the user's eating behaviour is that this person always eats chicken.

In embodiments of the meal preparation guidance system according to the present invention, defined by claim 3, the medical information comprises one or more of:
- allergy information for the user;
- cholesterol information for the user;
- chewing problem information for the user;
- diabetes information for the user;
- kidney disease information for the user;
- intolerance towards additives information for the user.

Thus, medical information in the context of the present invention concerns information on a user's health that restricts or influences the meal suggestions that the meal suggestion engine can generate for that user, for a lifetime or at least a long period of years, and includes food allergy indications like an allergy for milk, egg, peanut, tree nut, soy, wheat, fish, shellfish, etc., lower range medical conditions such as for instance information concerning the user's cholesterol level, information concerning the user's blood pressure level, possible chewing problems, larger range medical conditions that require adapted food ingredients, such as for instance diabetes requiring sugar adaptations or kidney disease requiring salt adaptations, or specific range medical conditions such as for instance certain additive intolerances the user is suffering from. The skilled person will appreciate that the above list is non-exhaustive.

In embodiments of the meal preparation guidance system according to the current invention, as defined by claim 4, the situational information comprises one or more of:
- diet program information for the user;
- sports program information for the user;
- pregnancy status of the user;
- religion of the user;
- vegan status of the user;
- season;
- daytime.

Thus, the meal preparation guidance system according to the invention preferably also maintains information related to the user's temporary situation that may influence the meal suggestions generated by the meal preparation guidance system. The season shall for instance have an influence on the food items or ingredients used in suggested meals. Also the daytime may influence the meals suggested: a lunch meal will be different from a dinner meal. In case a user is pregnant, the meals suggested for that user will be less spicy and the food items used will contain no alcohol. Also the religion of a user may exclude certain ingredients or food items from being used in suggested meals, for example halal, kosher, etc. A vegan user will be suggested meals without meat, fish and/or animal derived products like milk or eggs. The user may subscribe to a certain diet or sports program as a result of which the suggested meals will use certain ingredients and/or avoid the use of other ingredients. Again, the skilled person will appreciate that the above list is non-exhaustive. Additional or alternative situational information may be maintained in the user food profile, for instance the family, living or marital status.

Embodiments of the meal preparation guidance system according to the present invention, defined by claim 5, further comprise:
- a food pattern detector configured to analyse the user food profile of the user and user food profiles of other users stored in the user profile database, and to detect food patterns therein; and
- a profile cluster generator adapted to cluster the user food profile of the user with user food profiles of other users into a profile cluster based on the food patterns detected.

Indeed, advanced embodiments of the meal preparation guidance system according to the invention are equipped with learning technology, e.g. one or several neural networks, that detect repetitive patterns in the food habits of users. Users with similar food patterns are clustered into a profile cluster. Information on the meals prepared by a user may then be used in generating meal suggestions for other users that belong to the same cluster.

In embodiments of the meal preparation guidance system according to the present invention, defined by claim 6, the meal suggestion engine is configured to generate meal suggestions for the user that are further based on the food patterns detected for the profile cluster.

Hence, the meal preparation guidance system according to the invention shall not only rely on information related to past meals prepared by a user but will also consider information related to meals prepared by users that are found to have a similar food profile. This way, a greater variety of meal suggestions will be generated for a single user.

Embodiments of the meal preparation guidance system according to the present invention, defined by claim 7, further comprise:
- a grouping engine configured to group user food profiles of one or multiple users linked to a single meal preparation device.

By grouping user food profiles of multiple users that are linked to the same meal preparation device, e.g. family members or office colleagues, the meal preparation guidance system according to the invention can consider the user food profiles of multiple users when generating meal suggestions for a single user linked to that meal preparation device. This way, the meal preparation guidance system avoids to suggest meals to a user that are in conflict with allergies, situations or food patterns of other users that will likely join for the meal.

Embodiments of the meal preparation guidance system according to the present invention, defined by claim 8, further comprise:
- a foodbox suggestion engine configured to generate foodbox suggestions for the meal preparation device based on the user food profiles linked to the meal preparation device and the inventory, each foodbox suggestion representing an order list of food items.

Thus, in addition to meal suggestions, advanced embodiments of the meal preparation guidance system according to the invention also generate foodbox suggestions, i.e. packages of food items that can be ordered by a user linked to a meal preparation device. In order to generate the foodbox suggestions, the foodbox suggestion engine shall consider the inventory of food items available at the location of the meal preparation device as well as the user food profiles of the users linked to that meal preparation device, and optionally also the profile clusters if user food profiles that are linked to the meal preparation device also form part of profile clusters. This way, foodbox suggestions will include food items or ingredients that are running low in the inventory or whose expiry date is nearing, food items that are popular with one or several users linked to the meal preparation device, and food items that are likely to appear in future meal suggestions given the user food profiles of users linked to the meal preparation device.

In embodiments of the meal preparation guidance system according to the present invention defined by claim 9, the foodbox suggestion engine is configured to generate foodbox suggestions that are further based on the food patterns detected for the profile cluster.

Thus, also the foodbox suggestion engine may take benefit of the clustering of food profiles and compose foodbox suggestions comprising for instance food items that are often prepared by other users whose food profile belongs to the same profile cluster.

Embodiments of the meal preparation guidance system according to the present invention, defined by claim 10, further comprise an interface to the meal preparation device configured to receive one or more of:
- signals indicative for food items sensed by the meal preparation device;
- signals indicative for food items used by the meal preparation device to prepare a meal;
- a selection of a suggested meal;
- a request to prepare a meal;
- signals indicative for the preparation of food items by the user;
- implicit feedback from the user related to food items used or a meal prepared.

Indeed, preferably, the inventory and the user food profiles maintained by the meal preparation guidance system according to the invention are updated automatically. This may be achieved by integrating an interface that is able to receive and interpret signals from a remote meal preparation device. The signals may indicate which food items are sensed by the meal preparation device and for example comprise RFID tags, QR codes, barcodes, codes entered manually in a mobile application, etc. These food items are assumed to be used in preparing a meal and therefore require the meal preparation guidance system to adapt the inventory. The signals indicative for food items sensed by the meal preparation device or other signals indicating which food items are actually used by the meal preparation device in the preparation of a meal can also be used to update the user food profile of the user preparing a meal and/or other users linked to the meal preparation device. The meal preparation device may be equipped with an interface, e.g. a touch screen, enabling the user to select a meal out of a list of suggested meals. Signals indicative for the selected meal may also be reported to and interpreted by the meal preparation guidance system in order to update the inventory and user food profiles. The interface preferably also shall be able to receive requests for meal suggestions from the meal preparation device and - during the preparation of a meal - signals indicative for the way food items are prepared, e.g. temperatures, times and cooking modes set by the user. Such signals can again be used by the meal preparation guidance system to update the user food profiles automatically.

Embodiments of the meal preparation guidance system according to the invention, defined by claim 11, further comprise an interface to a mobile application running on a smart device held by the user, the interface being configured to receive from the mobile application one or more of:
- a request for a meal suggestion;
- a request to prepare a meal;
- a request for a foodbox suggestion;
- a selection of a suggested meal;
- a foodbox order;
- explicit feedback from the user related to a meal or related to a food item used in a meal.

Indeed, some of the above-mentioned signals, like a request for a meal suggestion, a selection of a suggested meal, or a request to prepare a meal, may also be received from a mobile application instead of from the meal preparation device. In a similar way, the meal preparation guidance system shall use such information to update the inventory and user food profiles. A mobile application running on a smart device however provides extended possibilities. From a mobile application, the user may issue a request for a foodbox suggestion, i.e. a request for a list of food items that the user should order in order to maintain an inventory of food items for future cooking. Once a foodbox suggestion is received and possibly adapted by the user according to personal desires, a foodbox order may be sent from the mobile application to the meal preparation guidance system. This way, the meal preparation guidance system stays aware of ordered food items and ordered volumes, such that the inventory can be updated accordingly. The mobile application also may collect information from a user relating to a prepared meal or relating to food items used to prepare a meal. Such feedback on past meals will enable the meal preparation guidance system according to the invention to adapt the user's user food profile, for instance preferred tastes or ways of preparing certain food items.

### Brief Description of the Drawings

Fig. 1 illustrates an embodiment of the meal preparation guidance system 100 according to the present invention;
Fig. 2 shows the content of a recipe preferences record 200 that forms part of the user food profile 111 in an embodiment of the meal preparation guidance system 100 according to the present invention;
Fig. 3 shows the content of a medical information record 300 that forms part of the user food profile 111 in an embodiment of the meal preparation guidance system 100 according to the present invention;
Fig. 4 shows the content of a situation information record 400 that forms part of the user food profile 111 in an embodiment of the meal preparation guidance system 100 according to the present invention; and
Fig. 5 illustrates a suitable processing system 500 for implementing the meal suggestion engine 103, the meal preparation instruction engine 104, the pattern detector 105, the grouping engine 107 and the foodbox suggestion engine 108 in an embodiment of the meal preparation guidance system 100 according to the present invention.

### Detailed Description of Embodiment(s)

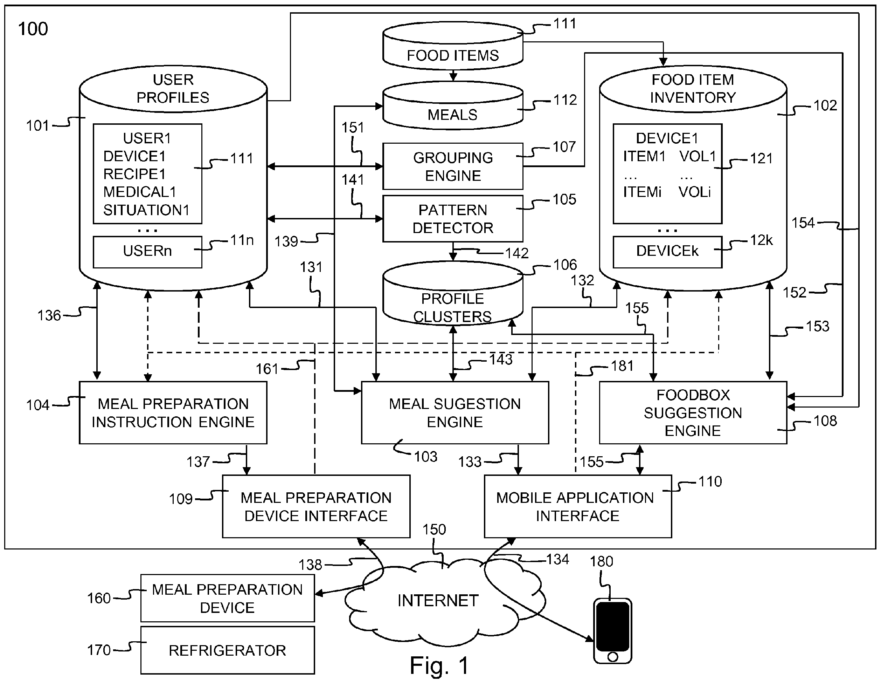

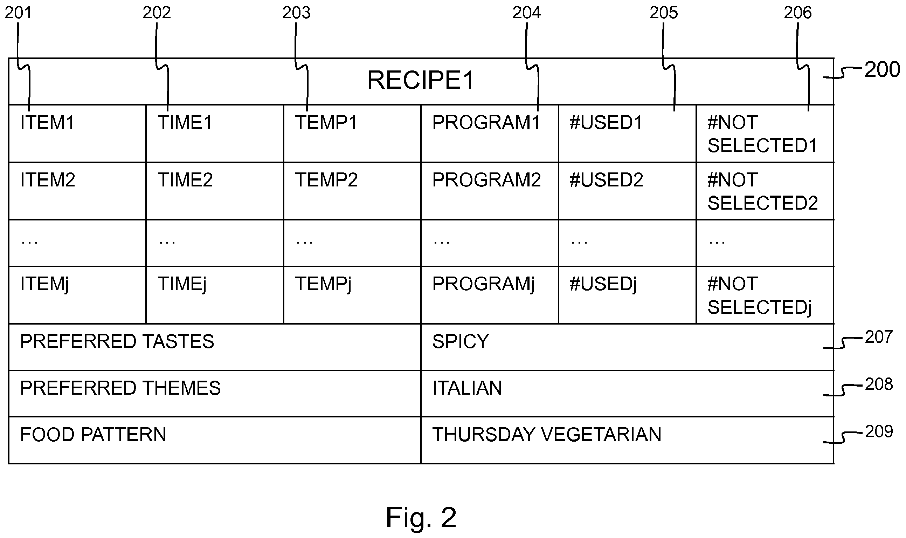

The meal preparation guidance system 100 drawn in Fig. 1 has a user profile database 101 wherein a user food profile 111 ... 11n is maintained for each registered user, USER1 ... USERn. A registered user can be a single person or a group if persons, for instance a household or family, that is linked to a single meal preparation device 160. Fig. 1 for instance shows that a first user USER1 is linked to a meal preparation device DEVICE1. In this user food profile 111 of this first user USER1, recipe preferences RECIPE1, medical information MEDICAL1 and situation information SITUATION1 are maintained that will be further described in the following paragraphs with reference to Fig. 2, Fig. 3 and Fig. 4.

Fig. 2 illustrates the recipe preferences record, RECIPE1 or 200, stored in the user profile database 101 as part of the user food profile 111 for the first user USER1. The recipe preferences record 200 comprises for each food item ITEM1 ... ITEMj that has been used in past meals by the first user USER1 a field 201 wherein an identification ITEM1 ... ITEMj of the food item is maintained, a field 202 wherein the preferred heating time TIME1 ... TIMEj of the first user USER1 for the food item ITEM1 ... ITEMj when prepared by its meal preparation device DEVICE1 is maintained, a field 203 wherein the preferred heating temperature TEMP1 ... TEMPj of the first user USER1 for the food item ITEM1 ... ITEMj when prepared by its meal preparation device DEVICE1 is maintained, a field 204 wherein the preferred preparation program PROGRAM1 ... PROGRAMj of the first user USER1 for the food item ITEM1 ... ITEMj when prepared by its meal preparation device DEVICE1 is maintained, a field 205 wherein the amount of times the food item was used in a meal #USED1 ... #USEDj by the first user USER1 is maintained, and a field 206 wherein the amount of times the food item was part of a suggested meal not selected for preparation #NOTSELECTED1 ... #NOTSELECTEDj by the first user USER1 is maintained. The recipe preferences record 200 further comprises a field 207 wherein preferred tastes of the first user USER1 are maintained, for instance SPICY, a field 208 wherein preferred food themes of the first user USER1 are maintained, for instance ITALIAN, and a field 209 wherein detected food patterns of the first user USER1 are maintained, for instance THURSDAY VEGETARIAN if it is detected that the first user USER1 never prepares meals with meat or fish on Thursdays.

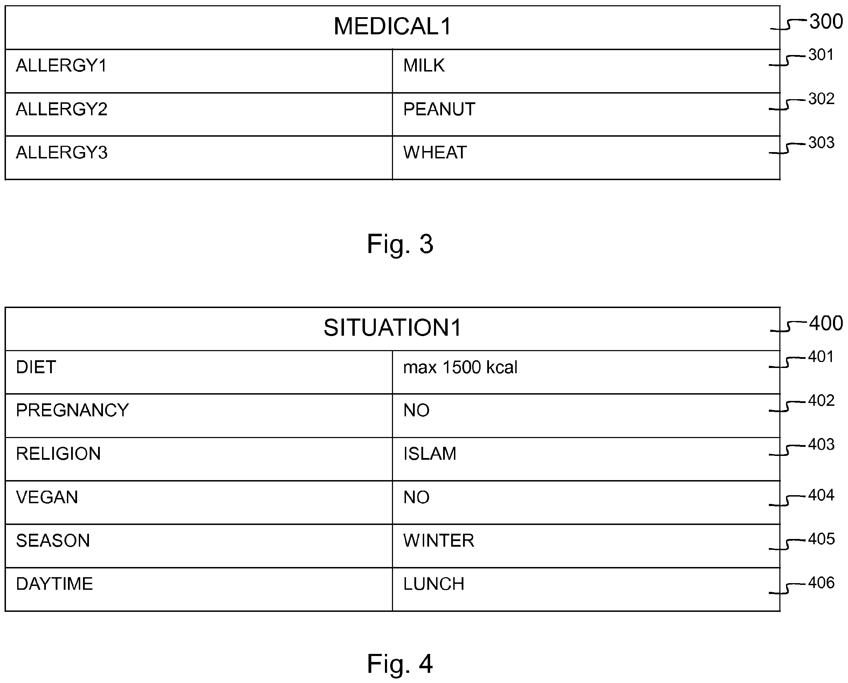

Fig. 3 illustrates the medical information record, MEDICAL1 or 300, stored in the user profile database 101 as part of the user food profile 111 for the first user USER1. This medical information record 300 comprises a list of allergies of the first user USER1. The example of Fig. 3 shows that the first user USER1 is allergic to milk according to a first entry 301 of the medical information record 300, is allergic to peanuts according to a second entry 302 of the medical information record 300, and is allergic to wheat according to a third entry 303 of the medical information record 300.

Fig. 4 illustrates the situation information record, SITUATION1 or 400, stored in the user profile database 101 as part of the user food profile 111 for the first user USER1. The situation information record 400 typically comprises a number of fields the content of which may vary in the short-term, i.e. range of hours or days, or midterm, i.e. range of weeks or months. The example of Fig. 4 shows that the first user USER1 is following a diet that requires him to keep the calorie consumption below 1500 kcal per day according to a first entry 401 of the situation information record 400, the first user USER1 is not pregnant according to a second entry 402 of the situation information record 400, the first user USER1 is Islamic according to a third entry 403 of the situation information record 400, the first user USER1 is not vegan according to a fourth entry 404 of the situation information record 400, the current season at the location of the first user USER1 is winter according to a fifth entry 405 of the situation information record 400, and the current time at the location of the first user USER1 is lunchtime according to a sixth entry 406 of the situation information record 400.

The meal preparation guidance system 100 of Fig. 1 has a food items database 111 wherein information in relation to food items is kept. A food item may be an ingredient, for instance chicken, or a combination of ingredients, for instance Spanish vegetables. Information related to food items may for instance comprise the energy value in kcal, additives and/or herbs, spiciness, etc. The meal preparation guidance system 100 of Fig. 1 also has a meals database 112, coupled to the food item database 111. The meals database 112 memorizes which combination of food items jointly constitutes a meal. The meal preparation guidance system 100 of Fig. 1 further has a food item inventory 102, also coupled to the food items database 111. This food item inventory 102 constitutes a database wherein the food items ITEM1 ... ITEMi and their respective volumes VOL1 ... VOLi associated with a meal preparation device DEVICE1 are maintained in a food item inventory record 121. Such food item inventory record 121 ... 12k is maintained for each meal preparation device DEVICE1 ... DEVICEk registered with the meal preparation guidance system 100. One such device is for instance the meal preparation device 160 drawn in Fig. 1. In the food item inventory record related to meal preparation device 160, the food item inventory 102 maintains which food items are kept in the refrigerator 170 or freezer at the location of the meal preparation device 160, and what amounts of these food items are available in refrigerator 170 or freezer. The food item inventory 102 may update the food item inventory record associated with meal preparation device 160 based on signals received from the meal preparation device 160 itself, if it is assumed that the meal preparation device 160 can signal which food items are used to prepare a meal, based on signals received from the refrigerator 170 if it is assumed that refrigerator 170 is an loT (Internet of Things) device with Internet connectivity and ability to signal that items are entered into or taken out of refrigerator 170, based on signals received from a mobile application running on the smartphone 180 of a user that is linked with the meal preparation device 160. The latter signals received from a mobile application running on smartphone 180 may comprise foodbox orders, i.e. an order for food items registered with the meal preparation guidance system 100, foodbox delivery confirmations entered by the user when a foodbox containing ordered food items is delivered at the location of the meal preparation device 160, signals indicative for a selected meal for preparation out of a list of suggested meals, etc. In addition to a list of food items and respective volumes of these food items available at the location of a meal preparation device, the food item inventory may maintain additional information in relation to the available food items, like for instance the expiry dates of the food items, an ingredient list of the food items, etc.

The meal suggestion engine 103 in the meal preparation guidance system 100 of Fig. 1 consults the user profile database 101, the meals database 112 and the food item inventory 102 to generate meal suggestions 133 upon request of a user. The meal suggestion engine 103 more precisely consults the user food profile 131 of the user requesting meal suggestions, consults the food item inventory record 132 for the meal preparation device that is linked with the user requesting the meal suggestions, and consults the meals database 112 to verify which food items jointly form a meal. Using this information 131, 132 and 139, the meal suggestion engine 103 generates one or several suggested meals 133 for the user taking into account the user food profile, and taking into account the availability of food items at the location where the meal will be prepared by meal preparation device 160. The suggested meals 133 are transferred to the mobile application interface 110 who further transmits the suggested meals 134 over the Internet 150 to a mobile application running on the user's smartphone 180. The user replies by selecting a meal for preparation. The meal selection 181 is communicated via the mobile application interface 110 to the user profile database 101, the food item inventory 102 and the meal preparation instruction engine 104. The user profile database 101 uses the information to update the user's food profile: the fields 205 wherein the amount of times a food item has been used by the user and the fields 206 wherein the amount of times a suggested food item has not been selected by the user will for instance be updated. The food item inventory 102 uses the information on the meal selection to update the food item inventory record maintained for the meal preparation device 160. The meal preparation instruction engine 104 at last uses the information on the meal selection to obtain from the user profile database 101 preferred recipe information 136 indicating how the user prefers the meal preparation device 160 to prepare the food items that form part of the meal. The meal preparation instruction engine 104 uses for instance the preferred heating times 202, preferred heating temperatures 203 and/or preferred preparation programs 204 recorded in the user's food profile to generate meal preparation instructions 137 that enable to remotely configure the meal preparation device 160 to prepare the food items of the selected meal according to the user's preferences. The so generated meal preparation instructions 137 are transferred to the meal preparation device interface 109 which further transmits the meal preparation instructions 138 over the Internet to the meal preparation device 160. The meal preparation device 160, for instance a remote controllable steamer with multiple food compartments and multiple, individually controllable steam generators, is able to receive and interpret the meal preparation instructions 138, and automatically configures and controls the steam generators to prepare the food items for the selected meal in line with the user's preferences. The food items that form part of the selected meal are entered into the meal preparation device 160 by the user, or by a different person who has received instructions from the user that made the meal selection, or they are entered automatically in situations where the meal preparation device 160 has an integrated refrigerator to store food items and an integrated food item dispenser that dispenses the food items for the selected meal into the food item compartments of the meal preparation device 160.

The embodiment of the meal preparation guidance system 100 illustrated by Fig. 1 further is equipped with a pattern detector 105 and a profile cluster generator and storage 106. As is indicated by arrow 141, the pattern detector 105 analyzes the user food profiles 111 ... 11n stored in the user profile database 101 to detect patterns, i.e. similarities in the user food profiles. The pattern detector 105 thereto uses learning technology, for instance a neural network trained to detect food patterns. When a pattern, i.e. one or plural similarities, is detected across user food profiles, this is reported via signal 142 to the profile cluster generator and storage 106. The profile cluster generator and storage 106 clusters such user food profiles and memorizes the created user food profile cluster together with an indication of the detected pattern. As an example, the pattern detector 105 may for instance detect through analysis of user food profiles 111 ... 11n that users who often eat chicken also like meals with turkey. User food profiles of users that often eat chicken may therefore be clustered. When a user whose user food profile belongs to such cluster requests a meal suggestion, the meal suggestion engine 103 shall not only consider that user's food profile and the food item inventory but will also consider the user food profiles of other users that belong to the profile cluster or profile clusters where that user belongs to. This is indicated by arrow 143 in Fig. 1. Use of profile cluster information 143 to generate meal suggestions brings the advantage that the meal suggestion engine 103 will be able to generate a wider variety of suggested meals that fit a user's preferences as inspiration is automatically obtained from meals that were prepared by users with a similar taste pattern.

The embodiment of the meal preparation guidance platform 100 illustrated by Fig. 1 further is equipped with a grouping engine 107. As is indicated by arrow 151, the grouping engine also analyzes the user food profiles 111 ... 11n stored in the user profile database 101 and groups the user food profiles of users that are linked to the same meal preparation device. Such users, for example the members of a single family or household, the colleagues of a single department or office floor, etc., prepare their meals using the same meal preparation device. These users consequently may be assumed to use food items stored in the same refrigerator or freezer. A foodbox suggestion engine 108 that is consulted by a user to obtain a foodbox suggestion, i.e. a list of food items that is recommended to be ordered, may take advantage of the grouping of users, as is indicated by arrow 152. Indeed, upon receipt of a request for a foodbox suggestion from the mobile application running on a user's smart device 180, the foodbox suggestion engine 108 shall consult the food item inventory 102 and use inventory information 153 to generate a list of food items that is no longer available in the refrigerator 170 or freezer, that is running low, or that has expired, such that the user can order these food items. In selecting the food items for the foodbox suggestion, the foodbox suggestion engine 108 shall consider the user food profile of the user requesting the foodbox suggestion and preferably also the user food profiles of other users that are registered with the same meal preparation device. This is indicated by arrow 154. In order to be able to consult the user food profiles of all users registered with the same meal preparation device 160, the foodbox suggestion engine 108 makes use of the information 152 received from the grouping engine 107. The foodbox suggestion engine 108 further may consider the user food profiles of other users that form part of a profile cluster where also the user requesting the foodbox suggestion belongs to. This is indicated by arrow 155 in Fig. 1. Generated foodbox suggestions are transferred to the mobile application interface 110 as indicated by arrow 155, and further transmitted to the mobile application running on the user's smart device 180. The user shall use the foodbox suggestions to order food items. Such order shall in turn be used to update the food item inventory record for the concerned meal preparation device 160.

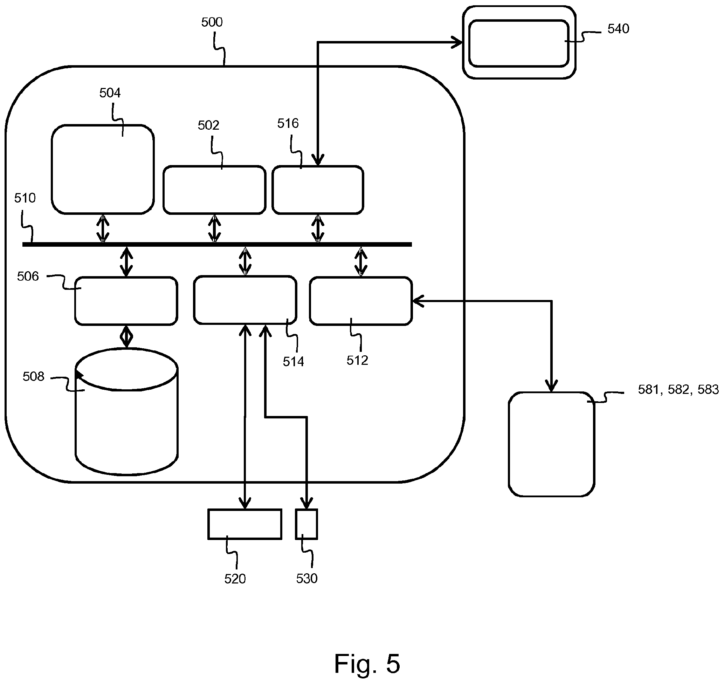

Fig. 5 shows a suitable computing system or processing system 400 for implementing the meal suggestion engine 103, the meal preparation instruction engine 104, the pattern detector 105, the grouping engine and the foodbox suggestion engine 108 in embodiments of the meal preparation guidance platform according to the invention. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 400. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 400, such as a keyboard 420, a touchscreen 430, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 400 to communicate with other devices and/or systems, for example with other computing devices 481, 482, 483. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A meal preparation guidance system (100) comprising:
A. a user profile database (101) configured to maintain a user food profile (111) for a user linked to a remote controllable meal preparation device (160), said user food profile (111) comprising one or more of:
- recipe preferences (200) of said user for food items (201) when prepared by said meal preparation device (160);
- medical information (300) of said user; and
- situational information (400) of said user;
B. a food item inventory (102) configured to maintain an inventory (121) of food items associated with said meal preparation device (160);
C. a meal suggestion engine (103), coupled to said user profile database (101) and said food item inventory (102), and configured to generate a meal suggestion (133) for said user based on said user food profile (111) and said inventory (121); and
D. a meal preparation instruction engine (104) adapted to generate processor interpretable meal preparation instructions (137) for said meal preparation device (160) based on said user food profile (111), and adapted to transfer said processor interpretable meal preparation instructions (137) to said meal preparation device (160) thereby enabling said meal preparation device (160) to prepare food items that form part of said meal suggestion according to said user food profile (111) of said user.

2. The meal preparation guidance system (100) according to claim 1, wherein said recipe preferences (200) comprise one or more of:
- heating times (202) for food items prepared by said meal preparation device (160) preferred by said user;
- heating temperatures (203) for food items prepared by said meal preparation device (160) preferred by said user;
- preparation programs (204) for food items prepared by said meal preparation device (160) preferred by said user;
- preferred food tastes (207) of said user;
- preferred food themes (208) of said user;
- detected food patterns (209) for said user;
- eating history information for said user;
- information (205) received from said meal preparation device (160) or from a mobile application, indicative for food items selected and/or prepared in past meals by said user;
- information (206) received from said meal preparation device (160) or from a mobile application, indicative for food items of past meal suggestions, not selected by said user for preparation;
- explicit feedback of said user on past meals; and
- implicit feedback on past meals.

3. The meal preparation guidance system (100) according to claim 1, wherein said medical information (300) comprises one or more of:
- allergy information (301, 302, 303) for said user;
- cholesterol information for said user;
- chewing problem information for said user;
- diabetes information for said user;
- kidney disease information for said user;
- intolerance towards additives information for said user.

4. The meal preparation guidance system (100) according to claim 1 wherein said situational information (400) comprises one or more of:
- diet program information (401) for said user;
- sports program information for said user;
- pregnancy status (402) of said user;
- religion (403) of said user;
- vegan status (404) of said user;
- season (405);
- daytime (406).

5. The meal preparation guidance system (100) according to claim 1, further comprising:
- a food pattern detector (105) configured to analyse said user food profile (111) of said user and user food profiles (11n) of other users stored in said user profile database (101), and to detect food patterns therein; and
- a profile cluster generator (106) adapted to cluster said user food profile of said user with user food profiles of other users into a profile cluster based on said food patterns detected.

6. The meal preparation guidance system (100) according to claim 5,
wherein said meal suggestion engine (103) is configured to generate meal suggestions for said user that are further based on said food patterns (143) detected for said profile cluster.

7. The meal preparation guidance system (100) according to claim 1, further comprising:
- a grouping engine (107) configured to group user food profiles (111) of one or multiple users linked to said meal preparation device (160).

8. The meal preparation guidance system (100) according to claim 7, further comprising:
- a foodbox suggestion engine (110) configured to generate foodbox suggestions (155) for said meal preparation device (160) based on said user food profiles (111) linked to said meal preparation device (160) and said inventory (121), each foodbox suggestion representing an order list of food items.

9. The meal preparation guidance system (100) according to claim 5 and claim 8,
wherein said foodbox suggestion engine (110) is configured to generate foodbox suggestions that are further based on said food patterns (143) detected for said profile cluster.

10. A meal preparation guidance system (110) according to one of the preceding claims, further comprising:
an interface (109) to said meal preparation device (160) configured to receive one or more of:
- signals indicative for food items sensed by said meal preparation device (160);
- signals indicative for food items used by said meal preparation device (160) to prepare a meal;
- a selection of a suggested meal;
- a request to prepare a meal;
- signals indicative for the preparation of food items by said user;
- implicit feedback from said user related to food items used or a meal prepared.

11. A meal preparation guidance system (100) according to one of the preceding claims, further comprising:
an interface (110) to a mobile application running on a smart device (180) held by said user, said interface (110) being configured to receive from said mobile application one or more of:
- a request for a meal suggestion;
- a request to prepare a meal;
- a request for a foodbox suggestion;
- a selection of a suggested meal;
- a foodbox order;
- explicit feedback from said user related to a meal or related to a food item used in a meal.
